Europäisches Patentamt

European Patent Office

Office européen des brevets

(11) Publication number: 0 404 393
A2

# EUROPEAN PATENT APPLICATION

(21) Application number: 90306205.7

(22) Date of filing: 07.06.90

(51) Int. Cl.5: H04N 5/44

(30) Priority: 19.06.89 US 368436

(43) Date of publication of application:
27.12.90 Bulletin 90/52

(84) Designated Contracting States:
DE FR GB

(71) Applicant: International Business Machines
Corporation
Old Orchard Road
Armonk, N.Y. 10504(US)

(72) Inventor: Cwynar, David Stanley
1063 Cranbrook Drive
Highland Heights, Ohio 44143(US)

Inventor: Ferguson, John Elton
7183 South Side Park Drive
Solon, Ohio 44139(US)
Inventor: Kline, Barry Dean
1264 Cleveland Heights Blvd.
Cleveland Heights, Ohio 44121(US)
Inventor: Peek, Charles Leslie
4103 Villacliff Circle
Austin, Texas 78759(US)

(74) Representative: Harris, Ian Richard
IBM United Kingdom Limited Intellectual
Property Department Hursley Park
Winchester, Hants. SO21 2JN(GB)

(54) Video digitising/display adapter.

(57) A video digitising and display adapter for use
with a personal computer. Analog video data input in
a plurality of formats including composite video,
RGB, and Y/C video are received by the adapter and
digitised. Subsequent conversion back to analog
form results in a video image output for simultaneous display in the composite video, RGB, and Y/C
video formats or combinations thereof. Microcomputer control of the adapter permits selection of the
particular input format video signal selected from the
multiformat inputs as well as the particular combination of different video output format signals made
available by the adapter.

FIG. 2

## VIDEO DIGITISING/DISPLAY ADAPTER

This invention relates to apparatus for digitising and display of video signals in a plurality of signal formats.

In the course of development of video technology several video signal formats evolved well known in the art for encoding and display of video information. Among these are RGB, composite video, Y/C video, and other formats.

As the art developed it became desirable to convert these analog signals into digital form for ease of video signal processing, such as for editing or inclusion of special effects, and thence to reconvert these digitised images back into analog form in one of the aforementioned conventional signal formats for subsequent recording, transmission, display, or the like. The video signal, once digitised, was in a format compatible with digital computers which have become widely accessible, and, accordingly, systems began to evolve combining the digitised image capture/display and computer technologies for purposes of computer control of video image signal processing.

However, due to the widely varying standard video signal formats which were prevalent serious problems existed in providing this digital image capture and display function. More particularly, it was difficult to interface easily between these multiple format video input signals and the computer. In like manner it was also a problem to further provide interfacing between the computer and video output devices, such as VCRs, video monitors, and the like. This was because these devices typically accommodate as their inputs analog video output signals in only one of the prescribed multiple conventional analog signal formats corresponding to the particular device.

One problem associated with accommodating such widely varying signal formats was that it was necessary to provide a separate piece of hardware for each signal source format type, the function of which was to convert signals of that particular format into another format required by the computer. Also additional separate hardware devices were required to provide analog outputs for each format required by output devices. Not only was this approach inconvenient, but it suffered from other obvious serious drawbacks. Not the least of these was the expense involved in providing separate adapter cards to accommodate each combination of input-output formats dictated by the particular formats of the available video input signal, computer system, and required video output signal.

Yet a further problem associated with provision of an image capture and display function for use with digital computers is accommodating multi-format input and output video signals related to the numerous different individual signals associated with each such format. For example, to accommodate an RGB-type format signal for input to a digitising card and for monitor outputs, numerous coaxial signal lines to and from the device were required including the analog red, green, blue inputs and outputs as well as sync inputs and outputs. When it is considered that in order to accommodate additional signal formats, numerous additional coaxial signal I/O lines were required, the serious electrical and mechanical problems associated with accommodating such numerous I/O lines may be readily appreciated, particularly in a personal computer environment having severe space limitations for connectors and cards.

Still another problem associated with devices of the prior art was that it was frequently desirable to view video output images in a plurality of these different signal formats displayed simultaneously. An example of the need for this facility might be professional video developers digitising images and preparing a video product containing them for a market employing a variety of monitor devices each accommodating a different signal format. It would be highly desirable for the developer to see the video image in these various formats simultaneously displayed during image digitising, processing, and development of the video (as, for example, on an RGB and Y/C monitor). However, with prior systems it was necessary to provide separate conversion hardware adapted to each monitor's particular input signal format requirements, this approach having serious attendant drawbacks.

For all of the foregoing and other reasons, it was readily apparent that a system was highly desired for providing video image capture and display function in association with a personal digital computer which at the same time accommodated both singly and in combination the widely varying video input/output signal format requirements prevalent in the technology.

Therefore, in accordance with the present invention there is provided apparatus for use with a digital computer having a bus structure in the capturing and displaying of video images, the apparatus comprising input connector means for simultaneously receiving a plurality of video input signals each in a correspondingly different video signal format; and switch means interconnected to the connector means for selecting different ones of the video signals in functional response to a selection signal impressed on the bus structure by the computer. The invention therefore accommodates the widely varying video input/output format requirements in providing economically in a single system a means for effecting both this digitising and I/O interfacing with the computer and other devices.

In a preferred form of the invention the apparatus comprises analog-to-digital conversion means for digitising the selected signal; and means for re-converting the digitised signal to a simultaneous plurality of analog video output signals each in a correspondingly different video output signal format. The re-conversion means can include a digital-to-analog converter.

In the preferred form of the invention the apparatus is disposed on an adapter card having a connector adapted for releasable interconnection to the bus structure of the computer. The adapter card preferably comprises a plurality of output connectors each carrying a different one of the analog video output signals.

Therefore, the invention also provides a digital computer incorporating the aforementioned apparatus. The digital computer may include other components such as a keyboard, a display device, storage devices, communications links and the like.

According to another aspect of the invention there is provided a method for operating a digital computer having a bus structure to capture and display video images, the method comprising the steps of simultaneously receiving a plurality of video input signals each in a correspondingly different video signal format; and pre-selecting different ones of the video signals in functional response to a selection signal delivered onto the bus by the computer. Preferably the method comprises the steps of digitising the pre-selected signals; and re-converting the digitised signals to a simultaneous plurality of analog video output signals each in a correspondingly different video signal format.

A video digitising and display adapter and method for use with a personal computer is disclosed. Analog video data input in a plurality of formats including composite video, RGB, and Y/C video are received by the adapter and digitised. Subsequent conversion back to analog form results in a video image output for simultaneous display in the composite video, RGB, and Y/C video formats or combinations thereof. Microcomputer control of the adapter permits selection of the particular input format video signal selected from the multiformat inputs as well as the particular combination of different video output format signals made available by the adapter.

In a preferred embodiment, apparatus is provided for use with a personal digital computer having a bus structure for the capture and display of video images. The apparatus will include input connector means for simultaneously receiving a plurality of video input signals each in a correspondingly different video signal format, and switching means for selecting different ones of these video signals in functional response to a selection signal generated by the computer and delivered across the bus structure to the switching means. Means are further provided in the apparatus for digitising the thus-pre-selected analog video input signal as well as means for re-converting such digitised input signal to a simultaneous plurality of analog video output signals each in a correspondingly different video signal format. In one form these various video input and output signal formats may include composite video, Y/C, RGB, and/or other formats. In a particular embodiment, a first input connector is provided for receiving a first video signal in a first of the video formats and a second input connector is further provided for receiving a second video signal in either of a plurality of video formats differing from that of the first format. Separate output connectors are further provided for each re-converted analog video output signal in each correspondingly different video signal format, whereby by interconnection of a video monitor to each such connector adapted to receive video signals in the format associated with the video output signal carried on the respective output connector, a simultaneous display of the digitised and re-converted images may be provided on the monitors which are each displaying video output signals in differing corresponding respective ones of the video formats. In operation then, a method has also been provided for use with a digital computer having a bus structure in capturing and displaying video images comprising simultaneously receiving a plurality of video input signals each in a correspondingly different video signal format; and pre-selecting different ones of the video signals in functional response to a selection signal delivered onto the bus by the computer.

The invention will be best understood by reference to the following description when read in conjunction with the accompanying figures, wherein:

Fig. 1 is a functional block diagram depicting a computerised video image capture and processing system.

Fig. 2 is a more detailed functional block diagram of the system of Fig. 1.

Fig. 3 is a functional block diagram of a video digitising and display adapter of the present invention schematically illustrating a plurality of input and output video signal formats being controlled through the computer bus depicted therein;

Fig. 4 is a more detailed functional block diagram depicting the processing of the various input sources illustrated in Fig. 1;

Fig. 5 is a detailed functional block diagram depicting the processing of the colour and mode controls of the system of Fig. 1.

Fig. 6 is a more detailed functional block diagram of the encoder of Fig. 5.

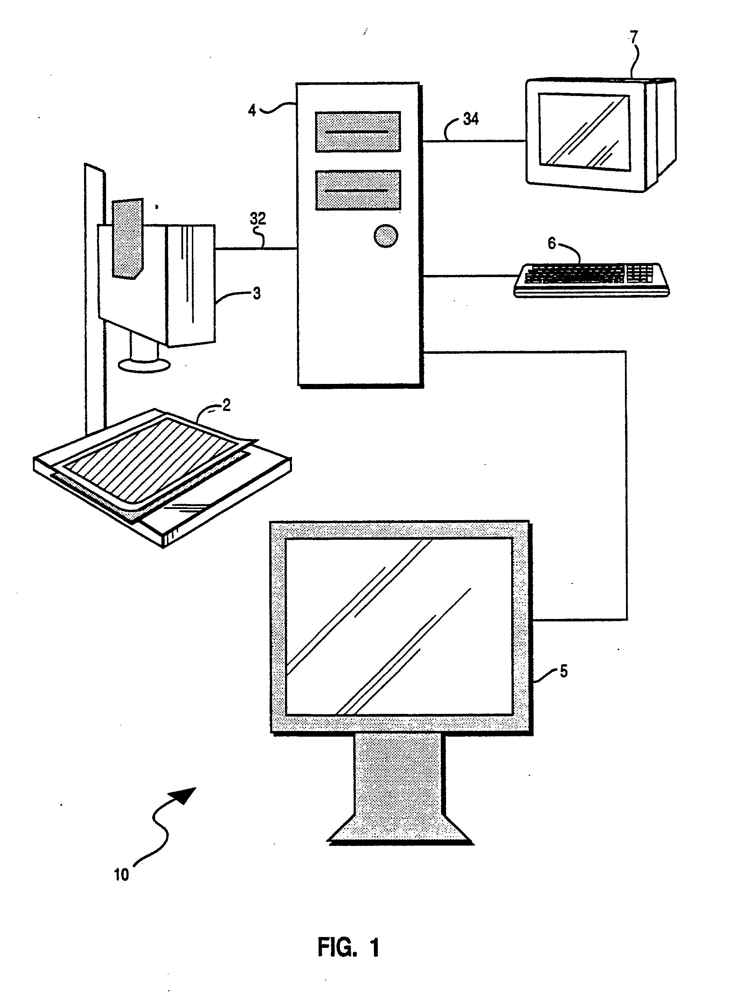

With reference now to the figures and in particular with reference to Fig. 1, there is depicted therein in block diagram form a digital computer system 10 which may be employed in accordance with the system and method of the present invention. As may be seen, system 10 may preferably take the form of a digital personal computer and includes a keyboard 6 for providing user input which is coupled to a central processing unit or host PC 4 in a manner well known in the art. Included in the host 4 are memory devices, which may comprise both volatile and non-volatile memory storage devices and which may include auxiliary memory devices such as magnetic disk or tape storage.

Host 4 is also coupled to one or more display drivers (not shown) which are utilised, in a manner well known in the art, to provide a visual display of video images by coupling appropriate control and data signals from the host 4 to the display 5 and one or more monitors 7. Those skilled in the art will appreciate that the display 5 and monitor 7 may be provided by a variety of devices such as those adapted to receive analog video in varying formats such as RGB, Y/C, NTSC, and the like.

In the system 10 shown in Fig. 1, a video camera 3 is further included having an analog video link 32 to the host 4. The camera 3 is shown to be trained on an object 2 having visual images to be digitised by the system 10. In a manner to be hereinafter described, the camera 3 will transfer the visual image of object 2 into analog electronic signals carried on the link 32 to the host 4 wherein they will subsequently be digitised, processed and reconverted into analog form for output on analog output link 34 after which they are displayed on one or more monitors 7. The system 10 may, of course, include other components and as to the general digital computer and display portions, the system may preferably be implemented by means of an IBM Model No. 80 PS/2 computer manufactured by International Business Machines Corporation of Armonk, New York.

The host 4, as is common in personal computers, includes a bus system facilitating data, control, and address I/O to various components of the system in a manner well known in the art. In particular with respect to the aforementioned Model 80 host 4, a proprietary Micro Channel bus system is employed which is desired in a preferred embodiment of the system 10. However, the invention is not intended to be so limited to a particular bus structure and contemplates use with other bus structures. More detailed information regarding this Micro Channel bus structure may be obtained with reference to the technical manuals accompanying the model 80 machine.

Also with respect to the system 10 depicted in Fig. 1, although analog video input signals on link 32 have been shown as originating from the camera 3, it will be readily appreciated that such analog video source material may be generated from a number of other sources such as the familiar VTR or video tape recorder, or the like and accordingly the invention is not intended to be limited to use with any particular source for generating such analog signals. As is well known in the art, these sources of analog video signals may be in a number of formats such as the aforementioned RGB, Y/C, composite video, or other formats. Although only one source of such formatted video information is shown in Fig. 1, it is a feature of the invention to accommodate a plurality of multiformat sources for subsequent digitising in the host 4 of their respective video images or data, processing thereof, and subsequent re-conversion back to analog video signals for simultaneous display on one or more display devices. A computer monitor 5 has been shown in Fig. 1 which conventionally comprises a portion of a general personal computer system including the host 4 and is used for conventional purposes of I/O with the host 4. However, as hereinbefore noted, a monitor 7 has further been included for display of these re-converted analog video signals. Although only one monitor 7 has been shown, it is a further feature of the invention that upon re-conversion of the digitised and processed or edited video signals in the host 4, the video signals are simultaneously provided in a plurality of the aforementioned formats. In this manner, by providing a plurality of monitors 7, each adapted to work with a different one of these analog video signal formats, a plurality of simultaneous video images may be displayed on these monitors, with each monitor displaying a respective re-converted analog signal in its corresponding format made available by the multiple outputs of the host 4 of the system 10.

Referring again briefly to the bus structures associated with personal computer systems 10, it is conventional to provide in the various available hosts 4 a plurality of adapter card or expansion slots. The purpose of these slots is to enable a user to custom configure a system to perform desired functions. It is a feature of the invention to provide for the digitising of analog video source material in multiple formats, editing and processing thereof by the personal computer, and subsequent re-conversion of this processed/edited video data into analog form in a plurality of formats for simultaneous display in these formats. It is a further feature of the invention to provide in a single adapter card adapted for pluggable insertion into one of these adapter slots in the host 4, the functions necessary to effect these features when operating in conjunction with the host 4 system 10 under appropriate software control.

Accordingly, the adapter card will carry connectors for receiving raw analog video source data in multiple formats and multiplexing/control hardware and the like on the card which, under computer control by interfacing with the aforementioned bus, will select one of these signals for digitisation. Moreover, in a preferred embodiment, this single adapter card will further include the analog-to-digital circuitry necessary to digitise this preselected signal. Due to interconnection of the adapter card with the bus, it will be readily appreciated that a further feature of the invention is to provide for processing and editing of this thereby digitised image under control of the host 4 computer through the bus. Still a further function of the adapter card is to then re-convert the processed/edited digitised video information into analog form, such function also being performed on board on the card by provision of appropriate digital-to-analog conversion circuitry.

Finally, encoder circuitry is provided on board (meaning on the adapter card) whereby when the digitised video signals are re-converted to analog form they are converted in multiple formats. Multiple connectors are provided on the card each carrying a different one of these re-converted digitised signals in a different one of the conventional analog video formats. In this manner, by connecting a monitor to each such connector adapted to receive that connector's particular signal format, simultaneous display of the video image in multiple formats results. It will be noted that this re-conversion is also under computer 4 control inasmuch as the adapter card and associated encoder circuitry is plugged into the interface bus of the computer 4.

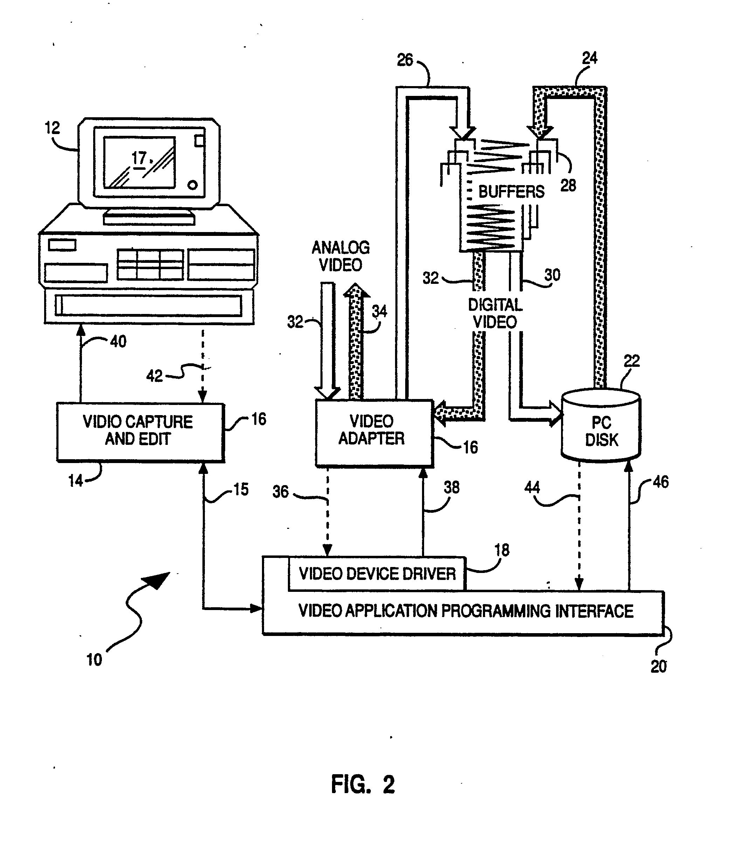

With reference now to Fig. 2, a more detailed functional block diagram of the system 10 of Fig. 1 is illustrated which will now be described.

As shown at line 32 analog video input signals in a variety of formats are received by the video adapter 16 of the invention. The video adapter 16 is connected to the host system 12 by the video device driver 18 which receives status from the adapter on lines 36 and sends commands and data to registers of adapter 16 on line 38. The bus of the system 10 is illustrated graphically in part by output on line 26 going from adapter 16 into the video buffers 28 inside the host processor 12. Further function of this bus is illustrated by line 30 indicating information stored in this video buffer 28 may be loaded into host storage such as a PC hard disk 22. From storage 22 via the bus, again illustrated by a line, 24, data can be received from the disk and put back into the buffer 28 of host 12.

From these buffers 28 data may also be read and then sent back via the host bus connection to the adapter 16 on line 32 to load video data into the video memory of the adapter 16.

A video device driver 18 has a video application programming interface 20 which directly interfaces as shown by line 15 with the video capture and edit capability or function 14 of the host system 10. The application programming interface 20 provides microcommands for the video capture and edit process that are ultimately delivered to the video adapter 16 via the device driver box 18. As a result of execution of the video capture and edit program 14 commands are sent via lines 40 to and status information is received via lines 42 from the system processor of host 12. This results in an image being displayed on the screen of one or more monitors 7, Fig. 1. The screen 17 of host 12 will generally be reserved for display of non-source material, i.e., the more conventional I/O data associated with personal computer systems. Such data includes operator input from keyboard 6, and user-interface information from the host 12 for operating the capture and display features of the invention. The displayed image may be live or a composite image including images controlled by the function selected by the video capture and edit module. The path 15 between the video capture and edit function 14 and the application programming interface 20 is via microcommands which are then in turn converted into individual separate commands and status requests across lines 36 and 38. As hereinbefore suggested functions indicated by lines 32, 30, 24 and 26 are all actually handled via the bus itself of system 10 and generally represent disk 22 I/O and adapter card 16 I/O.

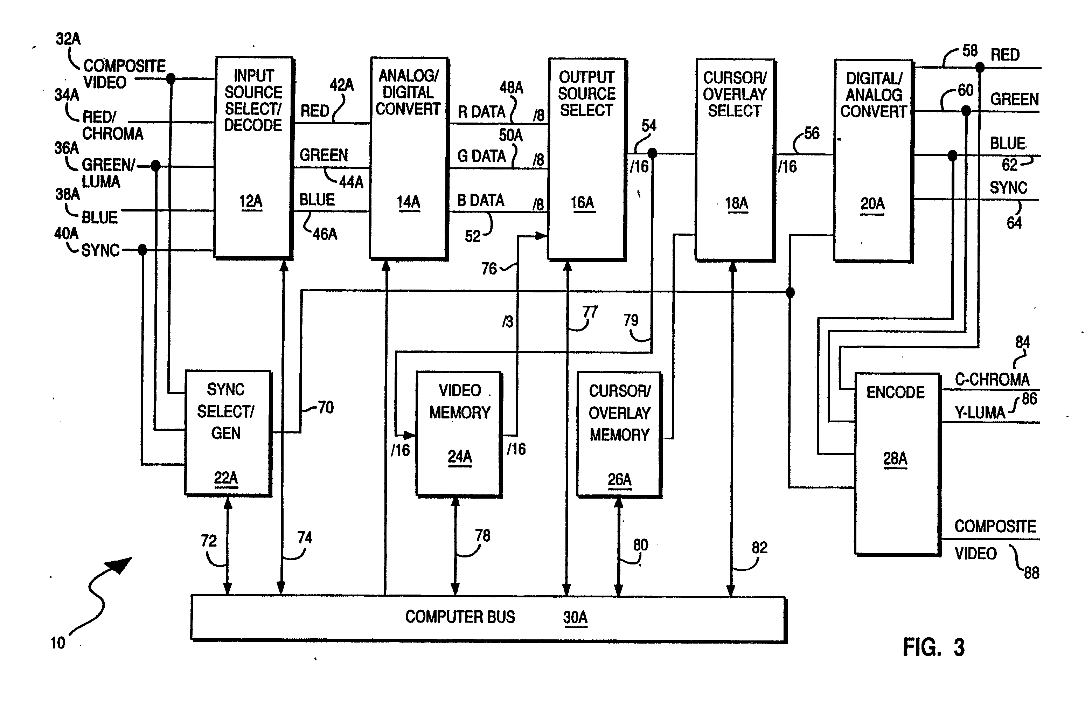

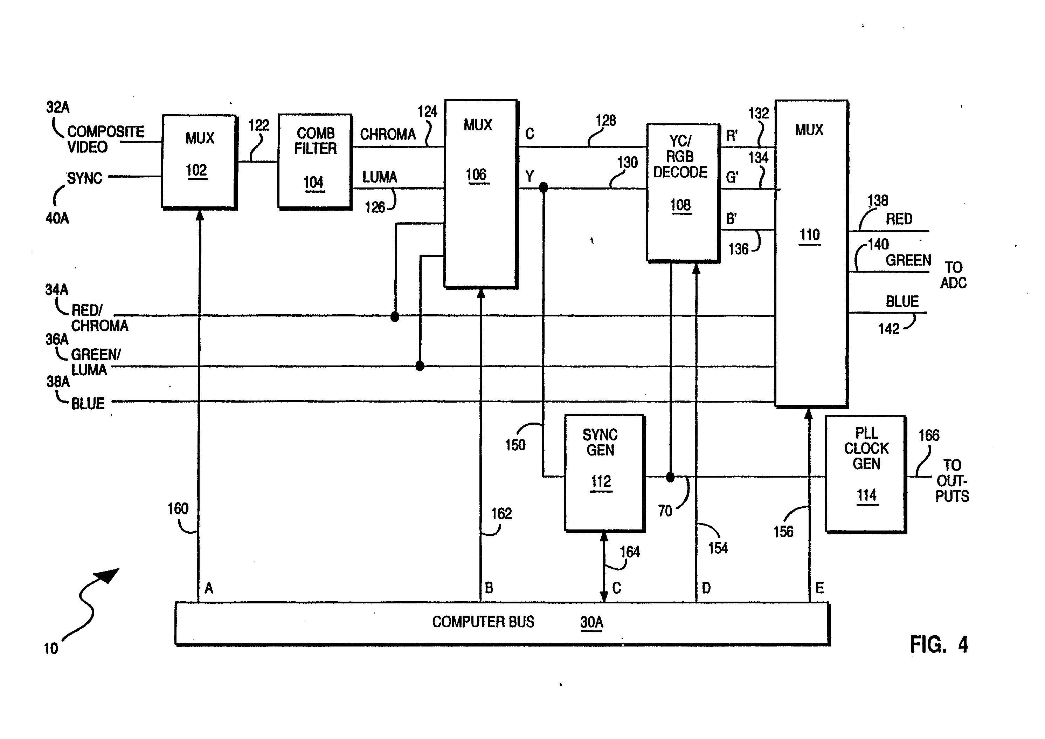

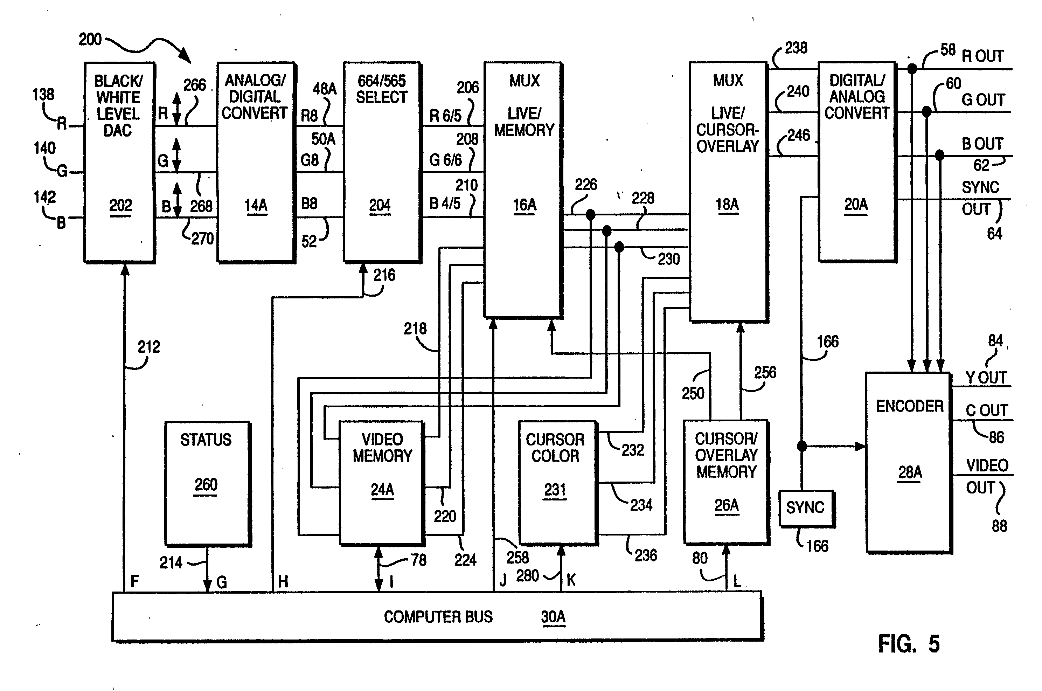

Referring now to Fig. 3 at the upper left-hand corner are depicted three signal inputs (shown generally as 32 in Fig. 2) that are represented by five lines going into the input source select/decode function 12A. The inputs are composite video 32A, in accordance with RS17A specification, the red 34A, green 36A and blue 38A signals for RGB (red and green being shared with the chroma and luma signals, respectively), and sync signals 40A which are a separate sync source for RGB. In box 12A the just-described input sources are selected and decoded under control of host PC 12 through its bus 30A to be hereinafter described. This function will be discussed in more detail in a subsequent figure. The output of this box is three colour signals, red, green and blue represented by lines 42A-46A respectively. These are routed into the analog and digital converter block 14A which will take the analog input and convert it into digital signals of red data, green data, and blue data on lines 48A, 50A and 52. The select/decode function 12A will be discussed in greater detail with reference to Fig. 4 and the A/D conversion function 14A will be discussed in greater detail re Fig. 5.

The outputs of converter 14A which are the digital data coming from the analog-to-digital conversion stage of the adapter card of the invention then are passed to the output select function 16A where these outputs are merged with or selected from video memory outputs 76 and digital data triggered by inputs from the host 12 represented by the line 77. Greater detail on the output from the select function 16A and subsequent function depicted as boxes 18A and 20A will be provided with reference to Fig. 5.

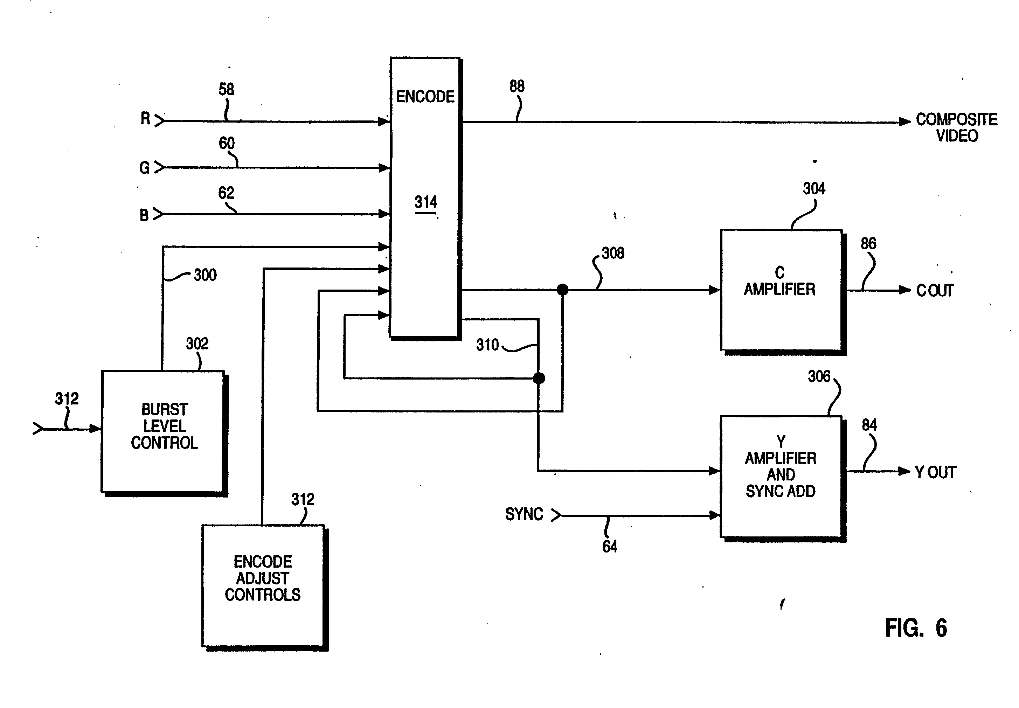

The video output 54 after having been selected at 16A from either the live source video signal (48A-52) or the memory source video on line 76 is then routed to a next selector function shown in box 18A whereby a cursor may be overlayed on top of the merged live and memory signals. This select function 18A is described in greater detail in Fig. 5. The output 56 of this second select process is a three line digital RGB signal, similar to the line 54, which is routed to a DAC 20A in which the analog-to-digital conversion process is accomplished. The output of DAC 20A then goes directly to drive the RGB lines 58, 60 and 62 which in turn will drive an RGB compatible monitor 7. The red, green and blue signals on lines 58, 60, 62 are also routed to encoder 28A where they are encoded. The encoder 28A, at a partial stage of the encoding, will generate Y and C signals 86, 84 respectively which may be displayed on a Y/C compatible monitor simultaneously with other displays herein described. These signals will be directed to the output through operational amplifiers. The composite video signal 88 is the final product of that encoding performed by encoder 28A and may be displayed on a compatible monitor simultaneously with the RGB monitor. The function of encoder 28A will hereinafter be described in greater detail with reference to Fig. 6.

Still referring to Fig. 3, a sync signal 64 is generated as part of the digital-to-analog conversion process and is output directly then into the monitor 7. This sync 64 may be on the green signal 60 depending upon the source selection. The boxes at the lower portion of this Fig. 3 represent the controls on interface bus for the rest of the adapter card. Box 22A represents a functional mechanism whereby a sync may be selected. The sync source for the adapter card of the invention may come from either the composite video signal 32A or from a signal imposed on the green signal line 36A. Alternatively it could also be a separate composite sync signal represented by line 40A. The source of the sync is selected as shown by box 22A and out of that source a sync signal 70 is then generated that is used to control the output display of the video signal. It is also used in the generation of the composite video 88 and the Y/C signal outputs 86, 84 previously discussed. A trigger is shown as the line 72 coming into box 22A which is a register setting from the host 12 designating the source of the sync. Explanation of the sync output 70 will be described in more detail in Fig. 4 with reference to box 114 wherein a phase lock loop is driven to generate the sync signal.

The video memory 24A is connected to the bus 30A by line 78 which is actually a 16 bit line of digital data that is a digital interface into the video memory 24A. The video memory 24A is dual ported, i.e., it has both a parallel input as well as a serial input/output port that is used on the adapter card. The parallel input is shown as line 78. Line 79 is the serial in line, and line 76 is the serial output line from memory 24A. From memory 24A via line 76 memory output that is going to be merged or not merged with the live input video signal is provided to selector 16A.

A cursor overlay/protect memory 26A or plane is provided. In the memory 26A there is one bit for each of the pixels in the image that will be digitised as well as 1 bit for a cursor and 1 bit for an overlay. If the cursor bit is 1, that indicates it is desired that the cursor be present. If the bit is 0, this indicates the cursor is not to be present. In the overlay memory if the bit is 1, this indicates the source is memory and a 0 indicates the source is a live camera or the like.

Line 74 simply illustrates a path to registers of the host 12 which will select which of the input video signal sources will be used at a particular time for digitising by the adapter. Source selection information is actually loaded into these registers from the host in response to user input on keyboard 6 and then used to set control circuitry for the card. Likewise, line 82 represents a register interface from the bus to the card to set the cursor select control function 18A. Line 80 is a parallel path that illustrates how the cursor and overlay memory 26A are loaded from the host 12. Both lines 78 and 80 are bidirectional and in fact all the lines from the bus 30A to the adapter card are bidirectional, meaning that registers and memories referenced herein are read-write, whereby the card can be used in a multi-tasking environment without the necessity of shadow registers.

Fig. 4 will now be discussed in more detail regarding input control. Starting at the upper left-hand corner, the composite video 32A and the sync 40A enter into a multiplexor 102. Based on control signals from host 12 that are provided across the interface represented by line 160, the multiplexor 102 has been set either to pass the sync 40A, or the composite video 32A onto line 122. This line then goes into comb filter 104 which may be a standard RS178 video comb filter which adds and subtracts two adjacent video lines together to improve the video quality as well as to separate the signal into chroma and luma signals, 124 and 126 respectively. These signals then will pass into the multiplexor represented by box 106. Also going into the multiplexor will be the red/chroma, line 34A, and green/luma, line 36A, which could also be Y/C input at this particular time.

Based on a host-loaded selection represented by line 162, a register will be preset to either pass the red/chroma 34A, green/luma 36A, or the chroma 124 and luma 126 from the comb filter to mux 106 and thence onto lines 128 and 130, respectively. It will be noted that since the sync source can come from either composite video, a separate composite sync, or on the green signal from the RGB or the green/luma line, the Y signal 130 also contains the sync signal. This is represented by the line 150 that is input into the sync generator 112. The control of the sync generator (i.e., whether the sync is going to be generated from external sources or internally) is controlled by a register set via line 164 by host 12. The output 70 of this sync generator 112 will then be processed subsequently by the phase lock loop generator 114 on the card to generate a phase lock loop sync output 166 for the rest of the processes for display and memory operations.

Continuing with Fig. 4, lines 128 and 130 then are routed to decoder 108 which is the Y/C-to-RGB decode function. Routed into this decoder via line 154 are represented register control functions for hue saturation and contrast controls which will determine the nature of the RGB decode process within decoder 108. The output of the decode function are three analog signals, red′, green′ and blue′, 132, 134 and 136 respectively which are then passed through to an analog multiplexor 110. The other inputs to mux 110 are the red/chroma, green/luma and blue signals 34A, 36A, 138A respectively which would be the RGB external sources. Based on a host provided control signal 156 which is from a card register, the mux 110 will either pass the R′, G′, B′ signals 132-136 or it will pass the RGB from the external source onto lines red, green and blue 138, 142 and 140. These signals will then pass to the analog-to-digital converter function which is represented by box 14A on Fig. 3. As to the PLL or phase lock loop clock generator 114 in Fig. 4, it takes the sync 70 out of the sync generator 112 and applies phase lock loop technology to that signal to make it stable, then passing it to the rest of the card via line 166.

Now that the line selection operations and the decode functions of Fig. 4 have been explained, Fig. 5 will be discussed in detail regarding the colour or mode controls for the digitising card. The signals identified on Fig. 4 as 138, 140 and 142, which are red, green and blue, are routed into the black level-white level control digital-to-analog converter function 202. This particular operation under host control by registers via line 212 will select the appropriate level that, for the black or "contrast" and the white, are the intensity levels for the signals. This allows colour rendering to take place under program control. The outputs of the DAC 202 are three red, green and blue signals that are still analog level signals 266, 268 and 270. These signals are passed into the three analog-to-digital converters represented collectively for convenience by box 14A. The output of each respective analog-to-digital converter is R 8, G 8 and B 8, 48A, 50A and 52, which are the digitised red, green and blue signals. These are routed through a line selector, 204, in which the pixel format is actually selected whether it be 664 (that is, 6 bits of red, 6 bits of green and 4 bits of blue) or 565 (5 bits of red, 6 bits of green, and 5 bits of blue). The resultant bus then will be R6/5, G6/6 or B4/5, lines 206, 210 and 208.

These lines are then routed into a multiplexor 16A. Other inputs to the multiplexor 16 are the lines coming from the video memory 24A. In Fig. 5 coming out of the video memory 24A, are three lines 218, 220 and 224 (which on Fig. 3 were represented as a single line for convenience, line 76). The mux 16A will then pass data indicating whichever pixel was selected via the host interface again at line 258. Outputs 226, 228 and 230, are the red, green and blue digital signals for that particular pixel. These lines are routed to digital multiplexor 18A. Three additional lines going into mux 18A are the actual cursor colour register lines represented by 232, 234 and 236.

The cursor colour box 231 is loaded under program control via line 280 across the standard interface 30A. The mux 18A and mux 16A are controlled from the previous noted cursor and overlay plane circuitry 26A which is loaded under program control via line 80 across the interface. The output line 256 controls whether the output of the mux 18A came either from the combined live and memory RGB signals or from the cursor signal, this mux 18A output being indicated by lines 238, 240 and 246. With signals on line 250, the mux 16A will be controlled and they will determine whether the output signal 226, 228 and 230 either originated from the live source or originated from video memory box 24A. The outputs of the mux 18A, then are routed into the digital-to-analog conversion function represented by DAC 20A.

Also delivered to DAC 20A is a sync signal represented by line 166. The sync signal was generated by the PLL generator 114 described in Fig.

4. The output of the digital-to-analog converter 20A will then be red out, green out, and blue out, 58, 60 and 62, as well as sync out, 64. The RGB out signals are then routed into the encoder 28A. Also the sync signal 166 is routed to encoder 28A. The outputs of encoder 28A are the Y out/C out lines, 84 and 86, and the composite video out shown by line 88. On the lower left-hand portion of Fig. 5 a status signal is indicated by box 260. This represents the card's reporting status to the host system 10 of current frame number, whether lock has been achieved, whether the system is in horizontal or vertical blanking, and whether or not capture is in progress, so that the host programs can intelligently control the processes of the adapter card. The interface to this status signal 260 is via a series of register calls, reads and writes, via line 214 which is across the interface 30A. The actual selected pixel format, whether it is 664 or 565, is loaded into a register via the interface represented by line 216. It will be recalled that in Fig. 5 the cursor and overlay memory 26A was discussed. The two memories represent a one bit for each of the pixels in the video RAM for cursor and video. A bit being on in the cursor memory indicates that the source of a given pixel will be from the cursor register whereas if the bit is 0, this indicates that the pixel will originate from the output of mux 16A. Likewise, if a bit is on in the memory overlay it indicates that mux 16A will pass the memory pixel and if it is 0 it will pass the live pixel through mux 16A.

Fig. 6 will now be referred to in detail to describe the composite video and the Y/C output signal generation, which is an expansion of block 28A of Fig. 5. Block 314, labelled the "encode" function, is the recipient of the red, green and blue signals, lines 58, 60 and 62, as well as the colour burst control output signal line 300 which comes from block 302. The colour burst control input is imposed on line 312 from the digital portion of the adapter. The lines 58-62 are routed to the encode function 314 and in one phase of the encoding the Y/C signals are output and then fed back into the final stages of the encode function 314 to create the composite video signal output indicated by line 88. As an interim step to this encode processing, the low level C and Y outputs on line 308 and 310, respectively, are generated which actually also comprise these feedback signals. Output 308 in turn is passed to block 304 which is a chroma or C amplifier system that will generate the actual chroma or C output on line 86. Likewise, output 310 is also an input to block 306 which is the Y or luma amplifier and sync add stage for adding the composite sync function. The composite sync is delivered to block 306 on line 64. The output of this amplifier and adding stage is line 84 or the Y out signal. At the lower left hand corner of Fig. 6 block 312 is indicated which is comprised of encode adjust controls. These controls are employed in the adapter card manufacture to generate signals 307 which are delivered to encoder 314 to facilitate fine tuning of each of the outputs, 88, 86 and 84 so that the highest quality video signals can be generated through the encode function.

While the invention has been shown and described with reference to particular embodiments thereof, it will be understood by those skilled in the art that the foregoing and other changes may be made therein without departing from the scope of the invention.

## Claims

1. Apparatus for use with a digital computer having a bus structure in the capturing and displaying of video images, comprising
input connector means for simultaneously receiving a plurality of video input signals each in a correspondingly different video signal format; and
switch means interconnected to the connector means for selecting different ones of the video signals in functional response to a selection signal impressed on the bus structure by the computer.

2. Apparatus as claimed in Claim 1 comprising analog-to-digital conversion means for digitising the selected signal; and
means for re-converting the digitised signal to a simultaneous plurality of analog video output signals each in a correspondingly different video output signal format.

3. Apparatus as claimed in Claim 2 wherein the re-conversion means includes a digital-to-analog converter.

4. Apparatus as claimed in any preceding claim wherein the input connector means comprises
a first input connector means for receiving a first video signal in a first of the video formats; and
a second input connector means for receiving a second video signal in either of a plurality of video formats different from the first format.

5. Apparatus as claimed in any preceding claim in the form of an adapter card having a connector adapted for releasable interconnection to the bus structure of the computer.

6. Apparatus as claimed in Claim 5 wherein the adapter card comprises a plurality of output connectors each carrying a different one of the analog video output signals.

7. Apparatus as claimed in any preceding claim comprising means for detecting each of a plurality of different format input sync signals associated with respective ones of the video input signals.

8. Apparatus as claimed in Claim 7 comprising switching means for selecting one of the input sync signals in functional response to the selection signal impressed on the bus structure by the computer.

9. Apparatus as claimed in Claim 8 comprising phase lock loop means responsive sequentially to differing ones of the input sync signals as a function of the selection signal.

10. Apparatus as claimed in any preceding claim wherein the video formats are selected from a group including Y/C, RGB, composite video, and other formats.

11. A digital computer comprising apparatus as claimed in any preceding claim.

12. A method for operating a digital computer having a bus structure to capture and display video images, the method comprising the steps of simultaneously receiving a plurality of video input signals each in a correspondingly different video signal format; and pre-selecting different ones of the video signals in functional response to a selection signal delivered onto the bus by the computer.

13. A method as claimed in Claim 12 comprising the steps of digitising the pre-selected signals; and re-converting the digitised signals to a simultaneous plurality of analog video output signals each in a correspondingly different video signal format.

14. A method as claimed in Claim 12 or Claim 13 comprising the step of pre-selecting a next one of the video signals in functional response to a next one of the selection signals delivered onto the bus by the computer.

15. A method as claimed in Claim 14 comprising the steps of
detecting sync pulses from a first of the video input signals;
generating phase lock loop sync pulses from the detected sync pulses; and
wherein the pre-selection of the next one of the video signals is at a time and functional relationship to the phase lock loop sync pulses.

16. A method as claimed in any of Claims 12 to 15 wherein the video signal formats are selected from the group including composite video, Y/C, RGB, and other formats.

17. A method as claimed in any of Claims 12 to 16 wherein the received video signals include a plurality of different format input sync signals; and wherein the pre-selecting one of the input video signals includes pre-selecting one of the input sync signals in functional response to the selection signal.

18. A method as claimed in any of Claims 12 to 17 wherein the video input signals are delivered upon a plurality of input lines; and wherein a first video input signal having one of the formats is imposed on a corresponding one of the lines; and further wherein either of a pair of second video input signals each having a correspondingly different one of the formats is delivered on a second one of the lines.

19. A method as claimed in Claim 18 wherein the pre-selected one of the video signals comprises either the first video input signal or one of the second video input signals.

20. A method as claimed in any of Claims 12 to 19 comprising the step of
simultaneously displaying visual images each as a function of a different one of the plurality of analog video output signals.

21. A method as claimed in any of Claims 12 to 20 wherein a cursor is superimposed on the digitised pre-selected signals as a function of a cursor control signal delivered onto the bus by the computer.

**FIG. 1**

FIG. 2

FIG. 3

FIG. 4

FIG. 5

FIG. 6